# FASCICULE DE BREVET EUROPEEN

(11) **EP 2 924 626 B1**
(45) Date de publication et mention de la délivrance du brevet: **03.10.2018**
(21) Numéro de dépôt: 15157176.7
(22) Date de dépôt: 02.03.2015
(51) Int. Cl.: G06Q 10/08, G06T 19/00, G06F 3/0488, G06F 3/01

(54) **Procédé de génération d'un contenu en réalité augmentée**
Verfahren zur Erstellung eines Inhalts in erweiterter Realität
Method for generating a content in augmented reality mode

(30) Priorité: 26.03.2014 FR 1452555
(43) Date de publication de la demande: 30.09.2015
(73) Titulaire: Schneider Electric Industries SAS, 92500 Rueil-Malmaison (FR)
(72) Inventeur: Meftah, Tewfik, 38100 Grenoble (FR); Jacquemin, Benoît, 38330 Saint Ismier (FR)
(74) Mandataire: Dufresne, Thierry

(56) Documents cités:
- FR-A1- 2 987 924
- US-A1- 2012 026 530
- US-A1- 2012 181 330

## Description

### Domaine technique de l'invention

La présente invention se rapporte à un procédé de génération d'un contenu en réalité augmentée pour un équipement situé dans le monde réel.

### Etat de la technique

Il est connu d'apposer des codes matriciels ou des étiquettes électroniques sur un équipement. A l'aide d'un terminal mobile, un opérateur peut scanner ce code matriciel qui est alors décodé ou lire l'étiquette électronique. L'adresse décodée ou mémorisée renvoie alors vers un contenu associé à l'équipement. Ce contenu est stocké sur un serveur distant auquel se connecte le terminal mobile pour y accéder. L'accès au contenu relié au code matriciel ou à l'étiquette électronique n'est pas toujours aisé. La raison principale tient au fait que le code matriciel ou l'étiquette électronique ne sont lisibles par le terminal mobile qu'à très courte distance, nécessitant que l'équipement soit accessible. Or ceci n'est pas toujours le cas, par exemple lorsque l'équipement est logé dans une armoire. US 2012/0181330 A1 décrit des systèmes et méthodes pour associer un message personnalisé à un code matriciel ou une étiquette électronique. Un utilisateur peut scanner le code matriciel d'un produit, et une application traduit des données codées dans le code matriciel en une URL pour obtenir du contenu, qui peut inclure une interface graphique pour construire un message personnalisé. Une fois que le message est sauvegardé et publié, un module de conversion peut ensuite associer l'URL incorporée dans le code matriciel avec le message personnalisé de sorte que la prochaine fois qu'un utilisateur scanne le code matriciel, l'application récupère le message personnalisé. US 2012/0026530 A1 décrit un système de réalité augmentée et une méthode pour gérer les pannes d'appareils électroniques associés à un code matriciel. Une fois que le code matriciel est scanné par l'utilisateur d'un terminal mobile, des informations supplémentaires pour résoudre les problèmes sont affichées en image augmentée sur l'image de l'appareil.

Le but de l'invention est de proposer un procédé permettant à un utilisateur d'accéder au contenu lié au code matriciel ou à l'étiquette électronique, même si celui-ci n'est pas aisément accessible.

### Exposé de l'invention

Ce but est atteint par un procédé de génération de contenu en réalité augmentée pour un équipement situé dans le monde réel, en employant un terminal mobile doté d'un écran, le procédé comportant :
- Une étape de détermination d'une base de données de réalité augmentée stockée dans un serveur de réalité augmentée,
- Une étape de lecture à l'aide du terminal mobile d'un code matriciel ou d'une étiquette électronique associé audit équipement, ledit code matriciel ou ladite étiquette électronique respectivement codant ou comprenant une adresse liée à un contenu,
- Une étape de mémorisation de ladite adresse,
- Une étape de génération d'un composant d'interface graphique correspondant à ladite adresse liée audit contenu et sélectionnable en réalité augmentée sur une image de l'équipement pour accéder audit contenu et sélectionnable en réalité augmentée sur une image de l'équipement sur l'écran du terminal mobile pour accéder audit contenu,
- Une étape de mémorisation du composant d'interface graphique dans la base de données stockée dans le serveur de réalité augmentée.

Selon une particularité, le code matriciel est un QR code ou équivalent.

Selon une autre particularité, l'étiquette électronique est de type NFC ou RFID.

Selon une autre particularité, le procédé comprend une étape d'association du composant d'interface graphique avec l'équipement ou avec un marqueur apposé au voisinage de l'équipement.

Selon une autre particularité, l'étape d'association du composant d'interface graphique avec l'équipement est réalisée par déplacement du composant d'interface graphique affiché en réalité augmentée sur l'écran du terminal mobile sur une image de l'équipement affichée sur l'écran du terminal mobile ou dans un repère géographique.

Selon une autre particularité, le composant d'interface graphique est composé d'un texte ou d'un symbole.

L'invention concerne également un système de génération de contenu en réalité augmentée pour un équipement situé dans le monde réel, cet équipement comportant :
- Un module de détermination d'une base de données de réalité augmentée stockée dans un serveur de réalité augmentée,
- Un module de lecture d'un code matriciel ou d'une étiquette électronique associé audit équipement, ledit code matriciel ou ladite étiquette électronique respectivement codant ou comprenant une adresse liée à un contenu, ladite étiquette électronique étant associée à un contenu,
- Un module de mémorisation de ladite adresse,
- Un module de génération d'un composant d'interface graphique correspondant à ladite adresse liée audit contenu et sélectionnable en réalité augmentée sur une image de l'équipement sur l'écran du terminal mobile pour accéder audit contenu,
- Un module de mémorisation du composant d'interface graphique dans la base de données stockée dans le serveur de réalité augmentée.

Selon une particularité, le code matriciel est un QR code ou équivalent.

Selon une autre particularité, le système comprend un module d'association du composant d'interface graphique avec l'équipement.

Selon une autre particularité, le module d'association du composant d'interface graphique avec l'équipement est agencé pour permettre un glissement du composant d'interface graphique affiché en réalité augmentée sur l'écran du terminal mobile sur une image de l'équipement affichée sur l'écran du terminal mobile.

Selon une autre particularité, le composant d'interface graphique est composé d'un texte ou d'un symbole.

### Brève description des figures

D'autres caractéristiques et avantages vont apparaître dans la description détaillée qui suit faite en regard des dessins annexés dans lesquels :
- la figure 1 représente un système employé pour mettre en oeuvre le procédé de l'invention,
- les figures 2A à 2D illustrent de manière schématique, les différentes étapes du procédé de l'invention.

### Description détaillée d'au moins un mode de réalisation

L'invention concerne un procédé de génération d'un contenu en réalité augmentée.

Dans la suite de la description, on considérera qu'un équipement E peut être un dispositif seul ou une machine seule ou un ensemble de dispositifs ou machines. Le terme équipement ne doit donc pas être considéré de manière limitative.

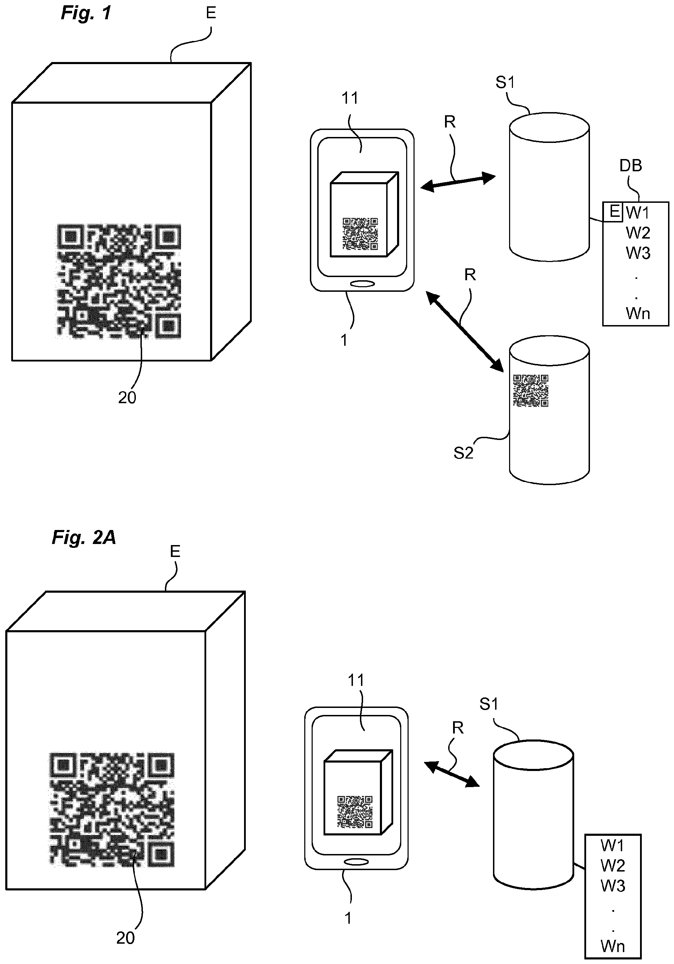

En référence à la figure 1, le système permettant de mettre en oeuvre le procédé de l'invention emploie notamment un terminal mobile 1 tel que défini ci-dessous.

Dans la suite de la description, par le terme "terminal mobile" 1, on entend un appareil électronique de type téléphone portable ou tablette tactile doté d'un écran 11. Il pourra s'agir également de lunettes dont chaque verre est remplacé par un écran. Le terminal mobile est doté d'un appareil photo et/ou vidéo pour filmer les objets situés dans le monde réel et afficher les images correspondantes sur l'écran 11 du terminal mobile. L'écran 11 du terminal mobile 1 sera par exemple de type tactile. Le terminal mobile 1 comporte en outre des moyens de traitement, des moyens de mémorisation et une ou plusieurs interfaces de communication lui permettant de dialoguer sur différents réseaux de communication filaire et/ou sans-fil.

Dans la suite de la description, par le terme "composant d'interface graphique" W1-Wn (désigné ci-après de manière générale W), on entend un composant de type "widget" venant se superposer en réalité augmentée sur l'écran 11 du terminal mobile 1 à l'image de l'équipement E affiché sur l'écran 11. Le composant d'interface graphique W prend par exemple la forme d'une icône ou d'un menu contextuel permettant d'accéder à un contenu lié à l'équipement pointé dans le monde réel. Ce contenu sera par exemple stocké localement sur le terminal mobile 1 ou sur un serveur S1 de réalité augmentée distant accessible au travers d'un réseau de communication R. Dans la suite de la description, on s'intéressera à un système qui comporte préférentiellement un terminal mobile et un serveur S1 de réalité augmentée communiquant avec ledit terminal mobile à travers un réseau de communication. Mais il faut comprendre que le terminal mobile pourrait tout à fait accomplir en local, c'est-à-dire hors ligne, le traitement et la détermination des composants d'interface graphique à afficher et le stockage dans ses moyens de mémorisation des contenus liés à chaque composant d'interface graphique identifié.

Dans la suite de la description, par le terme "image", on entend une image figée prise à l'aide d'un appareil photo ou un flux vidéo comportant plusieurs images successives capturées à l'aide d'une caméra vidéo.

L'affichage d'un composant d'interface graphique W en réalité augmentée est réalisé en lançant une application spécifique sur le terminal mobile 1. Cette application spécifique est agencée pour connecter le terminal mobile 1 au serveur S1 de réalité augmentée distant employé pour identifier les composants d'interface graphique W à afficher sur l'écran 11 du terminal mobile 1. Le serveur S1 de réalité augmentée stocke une base de données DB de réalité augmentée dans laquelle sont mémorisés les composants d'interface graphique W associés à chaque équipement E ou à la position et l'orientation du terminal mobile 1 dans son environnement, et les contenus associés à chacun de ces composants. L'identification de l'équipement E peut être réalisée de différentes manières. Le terminal mobile 1 peut par exemple envoyer une requête contenant l'image capturée grâce à son appareil photo et/ou vidéo vers le serveur S1 distant afin que celui-ci identifie chaque équipement E représenté sur l'image et renvoie, en réponse, chaque composant d'interface graphique W. Dans l'autre variante de réalisation, le terminal mobile 1 envoie dans la requête ses coordonnées géographiques et son orientation et le serveur S1 détermine, à partir de ces données, les composants d'interface graphique W à afficher. La position géographique et l'orientation du terminal mobile 1 par rapport aux équipements ciblés peuvent être obtenues de différentes manières connues, par exemple en utilisant des puces présentes dans le terminal mobile 1 et/ou en employant des solutions de triangulation à l'aide de capteurs externes.

Par ailleurs, un code matriciel 20 ou une étiquette électronique peut être apposé sur l'équipement E. Sur les figures annexées, nous avons pris l'exemple d'un code matriciel mais il faut comprendre qu'il peut s'agir d'une étiquette électronique. Ce code matriciel 20 ou cette étiquette électronique est lu par l'utilisateur, par exemple à l'aide de son terminal mobile 1 en exécutant une application logicielle dédiée. Généralement, ce code matriciel 20 ou cette étiquette électronique contient une adresse renvoyant également vers un contenu stocké sur l'équipement lui-même ou sur un serveur S2 distant auquel le terminal mobile 1 se connecte. Dans ce dernier cas, la connexion est par exemple réalisée via le réseau de communication R sans-fil de type 3G, 4G, WIFI ou toute autre solution connue.

L'invention permettra à l'utilisateur d'accéder au contenu lié au code matriciel 20 ou à l'étiquette électronique, même si, pour différentes raisons, le code matriciel 20 ou l'étiquette électronique se trouve être difficilement accessible.

L'invention consiste ainsi à transformer le code matriciel 20 ou l'étiquette électronique en un composant d'interface graphique W disponible en réalité augmentée sur l'écran 11 du terminal mobile 1 de l'utilisateur.

Plus précisément, le procédé de l'invention est mis en oeuvre en exécutant sur le terminal mobile 1 de l'utilisateur une application logicielle destinée à réaliser cette conversion. L'application logicielle comporte plusieurs modules logiciels exécutés par les moyens de traitement du terminal mobile 1.

Le procédé comporte ainsi :
- Une étape de détermination d'une base de données DB de réalité augmentée associée à l'équipement E. Cette étape de détermination peut être mise en oeuvre par reconnaissance de l'équipement E situé dans le monde réel à l'aide du terminal mobile 1 (figure 2A) ou par détermination de la position géographique et de l'orientation du terminal mobile 1 dans son environnement.

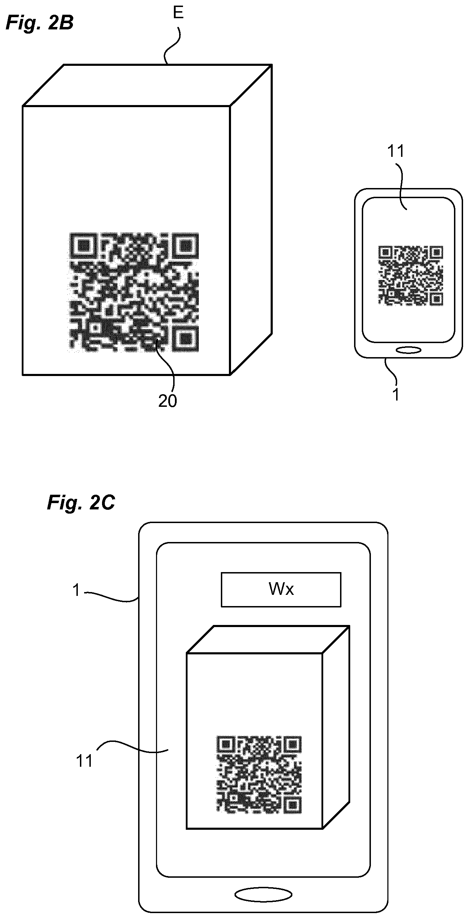

Cette étape est mise en oeuvre par un module de détermination chargé de commander l'envoi d'une requête à destination du serveur S1 de réalité augmentée. Comme précisé ci-dessus, la requête contient des données permettant d'identifier l'équipement E ou la position et l'orientation du terminal mobile 1 par rapport à l'équipement. Dans le premier cas, il peut s'agir par exemple d'une photo de l'équipement prise par l'utilisateur à l'aide de l'appareil photo et/ou vidéo.
- Une étape de lecture à l'aide du terminal mobile du code matriciel 20 ou d'une étiquette électronique associé à l'équipement et de mémorisation de l'adresse liée au code matriciel ou à l'étiquette électronique (figure 2B).

Ce code matriciel 20 ou cette étiquette électronique est par exemple apposé sur l'équipement E et est associé à un contenu. Ce contenu est par exemple mémorisé sur le serveur S2 distant ou sur l'équipement E lui-même. Sur la figure 2B, le code matriciel 20 ou l'étiquette électronique respectivement code ou mémorise une adresse renvoyant vers ledit contenu stocké sur le serveur S2 distant accessible via le réseau de communication R. La lecture du code matriciel 20 ou de l'étiquette électronique est réalisée grâce un module de lecture. Le module de lecture commande l'appareil photo et/ou vidéo du terminal mobile s'il s'agit d'un code matriciel ou un lecteur adéquat, par exemple un lecteur de type NFC (Near Field Communication) intégré au terminal mobile ou de type RFID ("Radio Frequency Identification") s'il s'agit d'une étiquette électronique. Un module de mémorisation stocke l'adresse lue dans le code matriciel 20 ou l'étiquette électronique.
- Une étape de génération d'un nouveau composant d'interface graphique activable pour accéder audit contenu.

Lors de cette étape, un module de génération de l'application logicielle récupère l'adresse mémorisée et génère un composant d'interface graphique Wx spécifique pour celle-ci. Ce composant d'interface graphique Wx peut être par exemple un symbole ou un texte, pouvant inclure plusieurs niveaux de détails.
- Une étape d'association du nouveau composant d'interface graphique Wx à l'équipement E (figure 2C), à un marqueur apposé au voisinage de l'équipement et reconnaissable de loin ou dans un repère géographique.

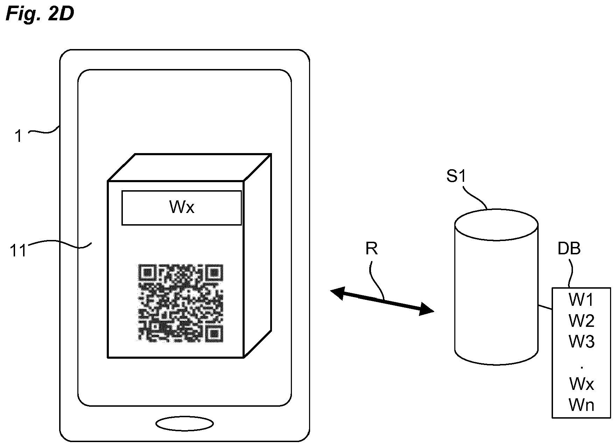

Un module de l'application logicielle permet à l'utilisateur d'associer le composant d'interface graphique Wx généré avec l'équipement E ou avec un marqueur spécifique reconnaissable. Pour cela, le module d'association permet par exemple à l'utilisateur de déplacer le composant d'interface graphique Wx généré sur l'écran 11 du terminal mobile 1 pour le coller sur l'image figée ou non de l'équipement E ou sur un marqueur affiché sur ledit écran 11, ou pour le positionner dans un repère géographique. L'application logicielle réalise alors l'association et lance ensuite un module de mémorisation de cette association.
- Mémorisation du composant d'interface graphique Wx en liaison avec ledit équipement E ou avec la position et l'orientation du terminal mobile 1 dans la base de données DB stockée dans le serveur S1 de réalité augmentée (figure 2D).

Lors de cette étape, le module de mémorisation de l'application logicielle est chargé de mettre à jour la base de données DB stockée dans le serveur S1 de réalité augmentée. Le nouveau composant d'interface graphique Wx généré, correspondant à l'adresse encodée dans le code matriciel ou stockée dans l'étiquette électronique, est ainsi ajouté dans la base de données du serveur de réalité augmentée pour l'équipement E sélectionné. Il vient alors enrichir l'image de l'équipement affichée sur l'écran d'un terminal mobile et est sélectionnable sur l'écran du terminal mobile. Ensuite, le composant d'interface graphique généré pourra être rendu visible en réalité augmentée sur l'écran de tout terminal mobile ciblant l'équipement E. Il ne sera plus nécessaire de scanner le code matriciel associé à l'équipement E. Cela permettra l'accès au contenu lié à l'équipement, notamment si le code matriciel n'est pas facilement accessible pour être scanné.

Le code matriciel pourra par exemple être un QR code ("Quick Response Code") ou un autre type de code à deux dimensions connu.

L'étiquette électronique sera par exemple une étiquette de type NFC ("Near Field Communication") ou de type RFID ("Radio Frequency Identification").

L'invention permet ainsi de rendre accessible facilement le contenu lié au code matriciel 20 ou à une étiquette électronique présent sur un équipement, sans avoir besoin d'y accéder directement. L'utilisateur peut ainsi visualiser le contenu lié au code matriciel 20 ou à l'étiquette électronique en sélectionnant le composant d'interface graphique Wx apparaissant en réalité augmentée sur l'écran 11 de son terminal mobile 1 lorsque celui-ci pointe l'équipement E.

## Revendications

1. Procédé de génération de contenu en réalité augmentée pour un équipement (E) situé dans le monde réel, en employant un terminal mobile (1) doté d'un écran (11), **caractérisé en ce qu'**il comporte :
- Une étape de détermination d'une base de données de réalité augmentée stockée dans un serveur (S1) de réalité augmentée,
- Une étape de lecture à l'aide du terminal mobile d'un code matriciel (20) ou d'une étiquette électronique associé audit équipement (E), ledit code matriciel (20) ou ladite étiquette électronique respectivement codant ou comprenant une adresse liée à un contenu,
- Une étape de mémorisation de ladite adresse,
- Une étape de génération d'un composant d'interface graphique (Wx) correspondant à ladite adresse liée audit contenu et sélectionnable en réalité augmentée sur une image de l'équipement sur l'écran du terminal mobile pour accéder audit contenu,
- Une étape de mémorisation du composant d'interface graphique (Wx) dans la base de données (DB) de réalité augmentée stockée dans le serveur (S1) de réalité augmentée.

2. Procédé selon la revendication 1, **caractérisé en ce que** le code matriciel (20) est un QR code ou équivalent.

3. Procédé selon la revendication 1, **caractérisé en ce que** l'étiquette électronique est de type NFC ou RFID.

4. Procédé selon l'une des revendications 1 à 3, **caractérisé en ce qu'**il comprend une étape d'association du composant d'interface graphique (Wx) avec l'équipement (E) ou avec un marqueur apposé au voisinage de l'équipement.

5. Procédé selon la revendication 4, **caractérisé en ce que** l'étape d'association du composant d'interface graphique (Wx) avec l'équipement (E) est réalisée par déplacement du composant d'interface graphique (Wx) affiché en réalité augmentée sur l'écran (11) du terminal mobile (1) sur une image de l'équipement (E) affichée sur l'écran (11) du terminal mobile (1) ou dans un repère géographique.

6. Procédé selon l'une des revendications 1 à 5, **caractérisé en ce que** le composant d'interface graphique (Wx) est composé d'un texte ou d'un symbole.

7. Système de génération de contenu en réalité augmentée pour un équipement situé dans le monde réel, **caractérisé en ce qu'**il comporte :
- Un module de détermination d'une base de données (DB) de réalité augmentée stockée dans un serveur (S1) de réalité augmentée,
- Un module de lecture d'un code matriciel (20) ou d'une étiquette électronique associé audit équipement (E), ledit code matriciel (20) ou ladite étiquette électronique respectivement codant ou comprenant une adresse liée à un contenu, ladite étiquette électronique étant associée à un contenu,
- Un module de mémorisation de ladite adresse,
- Un module de génération d'un composant d'interface graphique (Wx) correspondant à ladite adresse liée audit contenu et sélectionnable en réalité augmentée sur une image de l'équipement sur l'écran du terminal mobile pour accéder audit contenu,
- Un module de mémorisation du composant d'interface graphique dans la base de données (DB) de réalité augmentée stockée dans le serveur (S1) de réalité augmentée.

8. Système selon la revendication 7, **caractérisé en ce que** le code matriciel (20) est un QR code ou équivalent.

9. Système selon la revendication 7, **caractérisé en ce que** l'étiquette électronique est de type NFC ou RFID.

10. Système selon l'une des revendications 7 à 9, **caractérisé en ce qu'**il comprend un module d'association du composant d'interface graphique (Wx) avec l'équipement (E).

11. Système selon l'une des revendications 7 à 10, **caractérisé en ce que** le module d'association du composant d'interface graphique (Wx) avec l'équipement (E) est agencé pour permettre un glissement du composant d'interface graphique (Wx) affiché en réalité augmentée sur l'écran (11) du terminal mobile (1) sur une image de l'équipement (E) affichée sur l'écran du terminal mobile.

12. Système selon l'une des revendications 7 à 11, **caractérisé en ce que** le composant d'interface graphique (Wx) est composé d'un texte ou d'un symbole.

## Patentansprüche

1. Verfahren zur Erstellung eines Inhalts in erweiterter Realität für ein Gerät (E) in der realen Welt unter Nutzung eines mobilen Endgeräts (1) mit einem Bildschirm (11), **dadurch gekennzeichnet, dass** es umfasst:
- einen Schritt des Bestimmens einer Datenbank der erweiterten Realität, die auf einem Server (S1) der erweiterten Realität gespeichert ist,
- einen Schritt des Lesens eines mit dem Gerät (E) verknüpften Matrixcodes (20) oder elektronischen Etiketts mithilfe des mobilen Endgeräts, wobei der Matrixcode (20) bzw. das elektronische Etikett eine mit einem Inhalt verbundene Adresse codiert oder umfasst,
- einen Schritt des Speicherns der Adresse,
- einen Schritt des Erzeugens einer grafischen Schnittstellenkomponente (Wx), die der mit dem Inhalt verbundenen Adresse entspricht und in erweiterter Realität auf einem Bild des Geräts auf dem Bildschirm des mobilen Endgeräts auswählbar ist, um auf den Inhalt zuzugreifen,
- einen Schritt des Speicherns der grafischen Schnittstellenkomponente (Wx) in der Datenbank (DB) der erweiterten Realität, die auf dem Server (S1) der erweiterten Realität gespeichert ist.

2. Verfahren nach Anspruch 1, **dadurch gekennzeichnet, dass** der Matrixcode (20) ein QR-Code oder gleichwertig ist.

3. Verfahren nach Anspruch 1, **dadurch gekennzeichnet, dass** das elektronische Etikett vom Typ NFC oder RFID ist.

4. Verfahren nach einem der Ansprüche 1 bis 3, **dadurch gekennzeichnet, dass** es einen Schritt des Verknüpfens der grafischen Schnittstellenkomponente (Wx) mit dem Gerät (E) oder mit einem in der Nachbarschaft des Geräts angebrachten Marker umfasst.

5. Verfahren nach Anspruch 4, **dadurch gekennzeichnet, dass** der Schritt des Verknüpfens der grafischen Schnittstellenkomponente (Wx) mit dem Gerät (E) durch Verlagern der grafischen Schnittstellenkomponente (Wx), die in erweiterter Realität auf dem Bildschirm (11) des mobilen Endgeräts (1) auf einem Bild des Geräts (E), das auf dem Bildschirm (11) des mobilen Endgeräts (1) oder in einem geografischen Bezugspunkt angezeigt wird, realisiert wird.

6. Verfahren nach einem der Ansprüche 1 bis 5, **dadurch gekennzeichnet, dass** die grafische Schnittstellenkomponente (Wx) aus einem Text oder einem Symbol besteht.

7. System zur Erstellung eines Inhalts in erweiterter Realität für ein Gerät in der realen Welt, **dadurch gekennzeichnet, dass** es umfasst:
- ein Modul zum Bestimmen einer Datenbank (DB) der erweiterten Realität, die auf einem Server (S1) der erweiterten Realität gespeichert ist,
- ein Modul zum Lesen eines mit dem Gerät (E) verknüpften Matrixcodes (20) oder elektronischen Etiketts, wobei der Matrixcode (20) bzw. das elektronische Etikett eine mit einem Inhalt verbundene Adresse codiert oder umfasst, wobei das elektronische Etikette mit einem Inhalt verknüpft ist,
- ein Modul zum Speichern der Adresse,
- ein Modul zum Erzeugen einer grafischen Schnittstellenkomponente (Wx), die der mit dem Inhalt verbundenen Adresse entspricht und in erweiterter Realität auf einem Bild des Geräts auf dem Bildschirm des mobilen Endgeräts auswählbar ist, um auf den Inhalt zuzugreifen,
- ein Modul zum Speichern der grafischen Schnittstellenkomponente in der Datenbank (DB) der erweiterten Realität, die auf dem Server (S1) der erweiterten Realität gespeichert ist.

8. System nach Anspruch 7, **dadurch gekennzeichnet, dass** das der Matrixcode (20) ein QR-Code oder äquivalent ist.

9. System nach Anspruch 7, **dadurch gekennzeichnet, dass** das elektronische Etikett vom Typ NFC oder RFID ist.

10. System nach einem der Ansprüche 7 bis 9, **dadurch gekennzeichnet, dass** es ein Modul zum Verknüpfen einer grafischen Schnittstellenkomponente (Wx) mit dem Gerät (E) umfasst.

11. System nach einem der Ansprüche 7 bis 10, **dadurch gekennzeichnet, dass** das Modul zum Verknüpfen der grafischen Schnittstellenkomponente (Wx) mit dem Gerät (E) angeordnet ist, um ein Verschieben der grafischen Schnittstellenkomponente (Wx), die in erweiterter Realität auf dem Bildschirm (11) des mobilen Endgeräts (1) angezeigt wird, auf einem Bild des Geräts (E), das auf dem Bildschirm des mobilen Endgeräts angezeigt wird, zu ermöglichen.

12. System nach einem der Ansprüche 7 bis 11, **dadurch gekennzeichnet, dass** die grafische Schnittstellenkomponente (Wx) aus einem Text oder einem Symbol besteht.

## Claims

1. Method for generating content in augmented reality mode for an equipment item (E) situated in the real world, by employing a mobile terminal (1) provided with a screen (11), **characterized in that** it comprises:
- a step of determining an augmented reality database stored in an augmented reality server (S1),
- a step of reading, using the mobile terminal, a matrix code (20) or an electronic tag associated with said equipment item (E), said matrix code (20) or said electronic tag respectively coding or comprising an address linked to a content,
- a step of memorizing said address,
- a step of generating a graphical interface component (Wx) corresponding to said address linked to said content and that can be selected in augmented reality mode on an image of the equipment item on the screen of the mobile terminal to access said content,
- a step of memorizing the graphical interface component (Wx) in the augmented reality database (DB) stored in the augmented reality server (S1).

2. Method according to Claim 1, **characterized in that** the matrix code (20) is a QR code or equivalent.

3. Method according to Claim 1, **characterized in that** the electronic tag is of NFC or RFID type.

4. Method according to one of Claims 1 to 3, **characterized in that** it comprises a step of associating the graphical interface component (Wx) with the equipment item (E) or with a marker placed in the vicinity of the equipment item.

5. Method according to Claim 4, **characterized in that** the step of associating the graphical interface component (Wx) with the equipment item (E) is performed by moving the graphical interface component (Wx) displayed in augmented reality mode on the screen (11) of the mobile terminal (1) over an image of the equipment item (E) displayed on the screen (11) of the mobile terminal (1) or in a geographic reference frame.

6. Method according to one of Claims 1 to 5, **characterized in that** the graphical interface component (Wx) consists of a text or of a symbol.

7. System for generating content in augmented reality mode for an equipment item situated in the real world, **characterized in that** it comprises:
- a module for determining an augmented reality database (DB) stored in an augmented reality server (S1),
- a module for reading a matrix code (20) or an electronic tag associated with said equipment item (E), said matrix code (20) or said electronic tag respectively coding or comprising an address linked to a content, said electronic tag being associated with a content,
- a module for memorizing said address,
- a module for generating a graphical interface component (Wx) corresponding to said address linked to said content and that can be selected in augmented reality mode on an image of the equipment item on the screen of the mobile terminal to access said content,
- a module for memorizing the graphical interface component in the augmented reality database (DB) stored in the augmented reality server (S1).

8. System according to Claim 7, **characterized in that** the matrix code (20) is a QR code or equivalent.

9. System according to Claim 7, **characterized in that** the electronic tag is of NFC or RFID type.

10. System according to one of Claims 7 to 9, **characterized in that** it comprises a module for associating the graphical interface component (Wx) with the equipment item (E).

11. System according to one of Claims 7 to 10, **characterized in that** the module for associating the graphical interface component (Wx) with the equipment item (E) is arranged to make it possible to slide the graphical interface component (Wx) displayed in augmented reality mode on the screen (11) of the mobile terminal (1) over an image of the equipment item (E) displayed on the screen of the mobile terminal.

12. System according to one of Claims 7 to 11, **characterized in that** the graphical interface component (Wx) consists of a text or of a symbol.
